(19) Europäisches Patentamt
European Patent Office
Office européen des brevets

(11) **EP 1 374 513 B1**

(12) **EUROPÄISCHE PATENTSCHRIFT**

(45) Veröffentlichungstag und Bekanntmachung des Hinweises auf die Patenterteilung:
**07.03.2018 Patentblatt 2018/10**

(21) Anmeldenummer: **02732328.6**

(22) Anmeldetag: **15.03.2002**

(51) Int Cl.:
*H04L 27/26* (2006.01)     *H04L 1/00* (2006.01)

(86) Internationale Anmeldenummer:
**PCT/DE2002/000929**

(87) Internationale Veröffentlichungsnummer:
**WO 2002/078280 (03.10.2002 Gazette 2002/40)**

(54) **VERFAHREN ZUR RAHMEN- UND FREQUENZSYNCHRONISATION EINES OFDM-SIGNALS UND VERFAHREN ZUM SENDEN EINES OFDM-SIGNALS**

METHOD FOR FRAME AND FREQUENCY SYNCHRONIZATION OF AN OFDM SIGNAL AND METHOD FOR TRANSMITTING AN OFDM SIGNAL

PROCEDE DE SYNCHRONISATION DE TRAME ET DE FREQUENCE DE SIGNAUX OFDM ET PROCEDE D'EMISSION DE SIGNAUX OFDM

(84) Benannte Vertragsstaaten:
**AT BE CH CY DE DK ES FI FR GB GR IE IT LI LU MC NL PT SE TR**

(30) Priorität: **28.03.2001 DE 10115221**

(43) Veröffentlichungstag der Anmeldung:
**02.01.2004 Patentblatt 2004/01**

(73) Patentinhaber: **ROBERT BOSCH GMBH 70442 Stuttgart (DE)**

(72) Erfinder:
• **SCHAEFER, Wolfgang 31141 Hildesheim (DE)**
• **HANSEN, Christian 30171 Hannover (DE)**

(56) Entgegenhaltungen:
FR-A- 2 758 031     US-A- 5 627 863

• FECHTEL ET AL: "Fast frame synchronization, frequency offset estimation and channel acquisition for spontaneous transmission over unknown frequency-selective radio channels" IEEE INTERNATIONAL SYMPOSIUM ON PERSONAL, INDOOR AND MOBILE RADIO COMMUNICATIONS, 1993, Seiten 229-233, XP002116291 New York, USA

• KELLER T ET AL: "ORTHOGONAL FREQUENCY DIVISION MULTIPLEX SYNCHRONISATION TECHNIQUES FOR WIRELESS LOCAL AREA NETWORKS" IEEE INTERNATIONAL SYMPOSIUM ON PERSONAL, INDOOR AND MOBILE RADIO COMMUNICATIONS, Bd. 3, 15. Oktober 1996 (1996-10-15), Seiten 963-967, XP002063294 New York, USA

• MULLER R ET AL: "A low-overhead synchronization scheme for acquisition in OFDM and related transmission methods", ITG FACHBERICHTE, VDE VERLAG, BERLIN, DE, no. 157, 1 January 1999 (1999-01-01), pages 235-239, XP008163115, ISSN: 0932-6022

• CZYLWIK A: "Degradation of multicarrier and single carrier transmission with frequency domain equalization due to pilot-aided channel estimation and frequency synchronization", GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, vol. 1, 3 November 1997 (1997-11-03), pages 27-31, XP010254576, DOI: 10.1109/GLOCOM.1997.632506 ISBN: 978-0-7803-4198-2

**Beschreibung**

Stand der Technik

Die Erfindung geht aus von einem Verfahren zur Rahmen- und Frequenzsynchronisation eines OFDM-Signals bzw. einem Verfahren zum Senden eines OFDM-Signals nach der Gattung der unabhängigen Patentansprüche.

Im Rahmen eines weltweiten Konsortiums (DRM - Digital Radio Mondiale) wird ein neuer digitaler Rundfunkübertragungsstandard für den Frequenzbereich unter 30 MHz entwickelt. Als Modulationsverfahren soll hier das Mehrträgerverfahren OFDM (Orthogonaler Frequenzmultiplex) benutzt werden (genauer gesagt soll ein kohärentes OFDM-Übertragungsverfahren verwendet werden). Das OFDM-Signal besteht aus OFDM-Symbolen , die wiederum jeweils Subträgersymbole enthalten. Sendeseitig vorgegebene Subträgersymbole werden als Piloten ausgebildet, so dass empfangsseitig eine Kanalschätzung damit möglich ist. Die Piloten werden dabei in Zeit- und Frequenzrichtung auf die Subträger verteilt.

Aus der US-A-5 627 863 ist ein Verfahren zur Rahmensynchronisation von einem OFDM-Signal bekannt, wobei mit dem OFDM-Signal OFDM-Symbole, die jeweils Pilotsymbole als Subträgersymbole aufweisen, empfangen werden. In dem Verfahren werden die Pilotsymbole von einem Pilotphasenprofil, das benutzt wird um die Rahmensynchronisation zu ermöglichen, aufgeprägt. Hierbei werden die Piloten mit geeigneten komplexen Amplituden überschrieben.

Aus Müller R. et al.: "a low-overhead synchronization scheme for acquisition in OFDM and related transmission methods", ITG Fachberichte, VDE Verlag, Berlin, ist ein Synchronisationsverfahren für hohe Burst-Übertragungsraten basierend auf OFDM-Signalen bekannt. Dabei wird am Anfang der Übertragungsbursts ein OFDM-Pilotsymbol übertragen, welches nur aus Pilotträgern besteht, die Cazac-Eigenschaften aufweisen. Daher geht die Übertragungskapazität dieses Symbols für die Nutzdaten vollständig verloren.

In Czylwik, A.: "Degradation of multicarrier and singlecarrier transmission with frequency domain equalization due to pilot-aided channel estimation and frequency synchronization", Global Telecommunications Conference, 1997, wird die Leistungsfähigkeit von Multiträger- und Singleträger-Modulationsverfahren für Breitband-Mobilfunk-Übertragungssysteme verglichen. Dabei wird exemplarisch ein Übertragungsrahmen zugrundegelegt, der mit einem Synchronisationssymbol beginnt, gefolgt von einem Pilotsymbol mit CAZAC-Sequenzen zur Kanalschätzung. Erst danach folgen die Datensymbole. Somit gehen auch hier 2 OFDM Symbole für die Datenübertragung verloren.

Vorteile der Erfindung

Das erfindungsgemäße Verfahren zur Rahmen- und Frequenzsynchronisation eines OFDM-Signals bzw. das Verfahren zum Senden eines OFDM-Signals mit den Merkmalen der unabhängigen Patentansprüche haben den Vorteil, dass die sowieso vorhandenen Piloten nun auch empfangsseitig zur Rahmen- und Frequenzsynchronisation genutzt werden, indem sendeseitig den Piloten ein innerhalb eines Rahmens eindeutiges Pilotphasenprofil aufgeprägt wird. Jedes OFDM-Symbol eines Rahmens ist dann durch sein Pilotphasenprofil unterscheidbar. Damit werden die Piloten für einen zusätzlichen Zweck ausgenutzt, und es muss für die Frequenz- und Rahmensynchronisation keine zusätzliche Übertragungskapazität bereit gestellt werden.

Darüber hinaus zeichnet sich das erfindungsgemäße Verfahren zur Rahmen- und Frequenzsynchronisation durch eine hohe Robustheit gegenüber schlechten Ausbreitungs- und Empfangsbedingungen aus. Dies kann gesteigert werden, indem zur Rahmen- und Frequenzsynchronisation mehrere (unterschiedliche) Pilotphasenprofile eines Übertragungsrahmens verwendet werden. Weiterhin ist es erfindungsgemäß möglich, die Frequenz- und Rahmensynchronisation bereits innerhalb eines Übertragungsrahmens durchzuführen. Die OFDM-Symbole sind nämlich bei DRM (Digital Radio Mondiale) in Übertragungsrahmen aufgeteilt.

Darüber hinaus ist es von Vorteil, dass durch Ausnutzung der verteilten Piloten ein großer Fangbereich für eine grobe Frequenzschätzung erreicht werden kann. Mit der Pilotphasenmetrik kann eine Frequenzablage von mehr als der halben Signalbandbreite eindeutig detektiert werden. Mit Pilotphasenmetrik wird im Folgenden eine Berechnungsvorschrift bezeichnet, mit der das Pilotphasenprofil empfangsseitig mit den empfangenen Subträgern oder Subträgersymbolen verglichen wird. Die Begriffe Subträger und Subträgersymbole werden im folgenden als Synonyme gebraucht.

Durch die in den abhängigen Ansprüchen aufgeführten Maßnahmen und Weiterbildungen sind vorteilhafte Verbesserungen der in den unabhängigen Patentansprüchen angegebenen Verfahren zur Rahmen- und Frequenzsynchronisation eines OFDM-Signals bzw. zum Senden von eines OFDM-Signals möglich.

Es ist des weiteren von Vorteil, dass ein Vergleich der empfangenen Subträgersymbole mit einem abgespeicherten Pilotphasenprofil erst nach einem OFDM-Demodulator (DFT-Einheit) durchgeführt wird, da auf diese Weise eine Vielzahl von Pilotsubträgern, deren Hauptaufgabe die Kanalschätzung ist, zu Synchronisationszwecken genutzt werden kann. Aus diesem Grund muss vorher das OFDM-Demodulationsfenster korrekt plaziert werden, also eine grobe Zeitsynchronisation durchgeführt werden. Um eine grobe Zeitsynchronisation zu erreichen, ist es vorteilhaft mittels Autokorrelation nach dem Schutzintervall (Guard-Intervall) im empfangenen OFDM-Signal zu suchen. Mit demselben Verfahren kann auch eine Schätzung einer feinen Frequenzablage erreicht werden. Für eine korrekte Demodulation der Nutzdaten ist jedoch auch eine Bestimmung der groben Frequenzablage, also der ganzzahligen, vielfachen Subträgerabstandes und des Rahmenanfangs notwendig. Dies wird mit dem erfindungsgemäßen Verfahren realisiert.

Es ist von Vorteil, dass der Vergleich des empfangsseitig abgespalteten Pilotphasenprofils mit den Subträgersymbolen durch eine Kreuzkorrelation durchgeführt wird und das Ergebnis der Kreuzkorrelation für die Bestimmung der Rahmen- und Frequenzsynchronisation bewertet wird. Die Bewertung kann beispielsweise durch ein Haupt- Nebenmaximum-Verhältnis oder durch einen Meritfaktor erfolgen.

Darüber hinaus ist es von Vorteil, dass das zur Rahmen- und Frequenzsynchronisation nötige Pilotphasenprofil durch eine Pseudo- Zufallsfolge oder durch eine deterministische Funktion bestimmt wird. Diese Funktion ist dann wie auch die Pseudo- Zufallsfolge sende- und empfangsseitig bekannt.

Weiterhin ist es von Vorteil, dass die Piloten gleichmäßig in einem OFDM-Symbol verteilt werden, um so eine hohe Robustheit zu erreichen und für die Kanalschätzug eine optimale Plazierung der Piloten zu verwirklichen.

Ein weiterer Vorteil besteht in der hohen Robustheit des Rahmen- und Frequenzsynchronisationsverfahrens gegenüber Rauschstörungen. Diese Robustheit wird durch Verwendung einer Vielzahl von Pilotsubträgern bei der Berechnung der Pilotphasenmetrik erreicht.

Schließlich ist es auch von Vorteil, dass ein Sender und ein Empfänger zur Durchführung der erfindungsgemäßen Verfahren vorliegen.

Zeichnung

Ausführungsbeispiele der Erfindung sind in der Zeichnung dargestellt und werden in der nachfolgenden Beschreibung näher erläutert.

Es zeigt

Figur 1 ein Blockschaltbild des Gesamtübertragungssystems,
Figur 2 ein Blockschaltbild zur Pilotphasenmetrik,
Figur 3 ein Flussdiagramm des erfindungsgemäßen Verfahrens zum Senden des OFDM-Signals,
Figur 4 eine Verteilung von Piloten in einem OFDM-Symbol,
Figur 5 eine Pilotphasenmetrik für verschiedene OFDM-Symbole und
Figur 6 Haupt- Nebenmaximum- Verhältniswerte für mehrere DRM-Rahmen.

Beschreibung

Auf Grund der schwierigen Wellenausbreitungsbedingungen, speziell bei der Kurzwelle, muss eine große Robustheit von den verwendeten Synchronisationsalgorithmen gefordert werden. Ermittlung und Kompensation der Frequenzablage und Auffinden des Rahmenanfangs sind notwendige Bedingungen, um den Empfang digitaler Rundfunkprogramme sicherzustellen. Wegen der geringen Kanalbandbreite und der damit verbundenen niedrigen Datenrate kann kein komplettes OFDM-Pilotsymbol zu Synchronisationszwecken benutzt werden. Ebenfalls nötig für eine korrekte Demodulation der Nutzdaten ist eine aktuelle Kanalschätzung des Übertragungskanals.

Erfindungsgemäß wird daher ein Pilotphasenprofil sendeseitig aufgeprägt, so dass empfangsseitig eine Rahmen- und Frequenzsynchronisation möglich ist. Der Einsatz der erfindungsgemäßen Verfahren ist insbesondere für digitale Amplitudenmodulation (AM-Rundfunkübertragung) interessant, da bei diesen Anwendungen die Netto-Bitrate vergleichsweise klein ist.

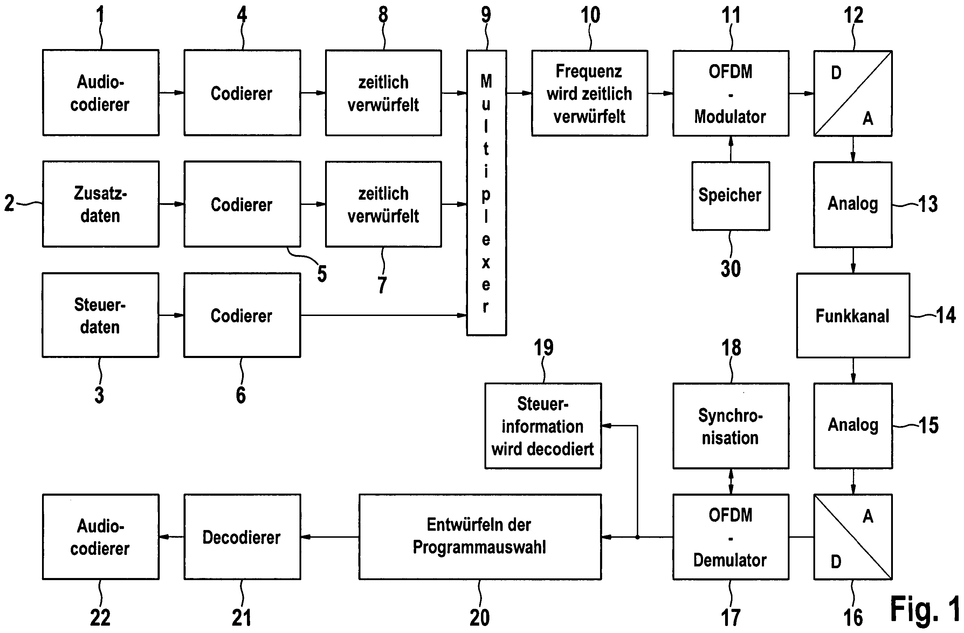

Figur 1 zeigt ein Blockschaltbild des

Gesamtübertragungssystems. Als Datenquellen liegen ein Audiocodierer 1, Zusatzdaten 2 und Steuerdaten 3 vor. Sie werden jeweils durch die Codierer 4, 5 und 6 einer Codierung unterzogen. Die so codierten Audio- und Zusatzdaten werden dann in den Blöcken 8 und 7 zeitlich verwürfelt (Interleaving). Ein Multiplexer 9 fügt dann die Audiodaten, die Zusatzdaten und die Steuerdaten zu einem Datenstrom zusammen, der im Block 10 einem Frequenz-Interleaving und im Block 11 einer inversen diskreten Fouriertransformation unterzogen wird. Damit wird eine OFDM-Modulation erreicht. Block 11 wird daher auch als OFDM-Modulator bezeichnet. Im OFDM-Modulator 11 werden dem Datenstrom die Piloten mit dem Pilotphasenprofil aus einem Speicher 30 hinzugefügt. Im Block 12 wird dann das so entstandene OFDM-Signal in ein analoges Signal umgesetzt. Im Block 13 wird eine Sendeverstärkung und eine Abstrahlung der Rundfunksignale mit einer Antenne vorgenommen.

Über einen Funkkanal 14 erreicht das OFDM-Signal dann einen Empfänger und zwar in einem Block 15, der eine Antenne und einen Hochfrequenzempfänger aufweist. Die empfangenen Signale werden dann im Analog- Digitalwandler 16 einer Digitalisierung unterzogen. Die so erhaltenen Abtastwerte werden nun im Block 17 einer schnellen Fouriertransformation unterzogen (OFDM-Demodulation). Hier wird auch die erfindungsgemäße Synchronisation durch den Block 18 realisiert. Im Block 19 wird die in den Daten enthaltene Steuerinformation decodiert, während parallel im Block 20 das Entwürfeln, also das Deinterleaving der Audio- und Zusatzdaten vorgenommen wird. Hier wird auch die Programmauswahl aus dem Datenstrom durchgeführt, also beispielsweise welches Rundfunkprogramm vom Nutzer eingestellt wurde. Durch einen Block 21 erfolgt dann die Decodierung der ausgewählten Daten, um im Block 22 eine Audiodecodierung vorzunehmen, so dass dann am Ausgang des Audiodecodierers 22 Audiodaten vorliegen, die mittels eines Lautsprechers und eines Audioverstärkers wiedergegebenen werden können.

Den zu übertragenden Daten werden im OFDM-Modulator 11 Piloten hinzugefügt. Diese Piloten dienen zu einer Kanalschätzung des Übertragungskanals 14. Zusätzlich wird nun diesen Piloten ein Phasenprofil aufgeprägt. Dies wird im Folgenden als Pilotphasenprofil bezeichnet. Das Pilotphasenprofil wird dann empfangsseitig im Block 18 zur Rahmen- und Frequenzsynchronisation genutzt.

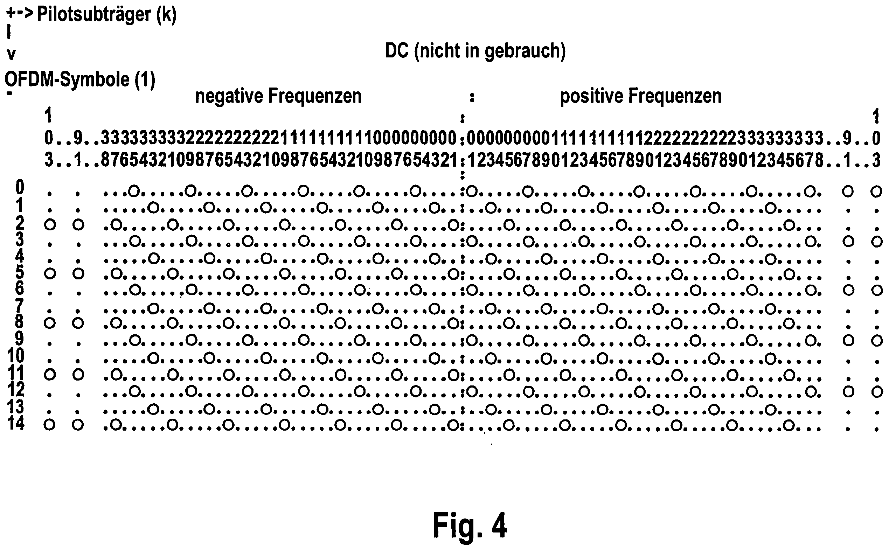

Figur 4 zeigt eine Verteilung der Pilotsymbole in Frequenz- und Zeitrichtung, wobei die Piloten mit 0 gekennzeichnet sind. Bei der Verwendung von kohärenten OFDM-Systemen, wie sie bei DRM eingesetzt werden sollen, ist eine Kanalschätzung mittels Pilotsubträger-Symbolen notwendig, da eine Entzerrung und eine korrekte Demodulation durchgeführt werden muss. Durch eine gleichmäßige Verteilung der Pilotsubträger in Zeit- und Frequenzrichtung wird eine gute Kanalschätzung erreicht. Die Datensubträger sind in Figur 4 mit einem Punkt dargestellt. Im Allgemeinen ist es hinsichtlich einer verlässlichen Kanalschätzung nicht nötig, auf jedem Subträger ein Pilotsymbol zu senden, da sich der Übertragungskanal 14 nur mit einer endlichen Geschwindigkeit ändert. Eine Kanalschätzung für die zwischen zwei Piloten liegenden Subträger wird daher mittels Interpolation erreicht.

Für die Güte einer Kanalschätzung ist es irrelevant, welche Phasen die Pilotsymbole haben. Es sollte lediglich darauf geachtet werden, dass der Crestfaktor eines durch Pilotsymbole erzeugten Mehrtonsignals gering ist. Um den Crestfaktor eines Mehrtonsignals gering zu halten, kann folgendes einfaches Phasengesetz verwendet werden (Gleichung 1). Für den $k$-ten Pilotsubträger im $l$-ten OFDM-Symbol läßt sich damit schreiben

$$P_{l,p(l,k)} = \sqrt{2} \cdot \widetilde{W}_{p(l,k)} = \sqrt{2} \cdot e^{j\frac{\pi \cdot p(l,k)^2}{N_0}}$$

Gleichung 1

mit

$p(l,k)$     : Index eines Pilotsubträgers im $l$-ten OFDM-Symbol eines Rahmens
$N_0$          : Integerzahl

Es ist zu beachten, daß die Phase der Pilotsubträger lediglich vom Subträgerindex $p(l,k)$ in Gleichung 1 abhängt. Fügt man eine vom Subträgerindex und von der OFDM-Symbol Nummer abhängige zusätzliche Phasenrotation $\varphi_{RND}(l,k)$ zu, so ergibt sich Gleichung 2

$$P_{l,p(l,k)} = \sqrt{2} \cdot W_{p(l,k)} = \sqrt{2} \cdot e^{j\frac{\pi \cdot p(l,k)^2}{N_0}} \cdot e^{j\varphi_{RND}(l,k)}$$

Gleichung 2

Die Phase $\varphi_{RND}(l,k)$ ist hier eine pseudo-zufällige zusätzliche Phasenrotation. Der Wert dieser zusätzlichen Phasenrotation ist vom Subträgerindex $k$ und der OFDM-Symbolnummer $l$ abhängig. Die zusätzlichen Phasenrotationen können in einer Phasenmatrix gespeichert werden.

$$\phi_{RND}\,|_{N_{FRAME}\times N_{CARRIERS}} = \begin{pmatrix} \varphi_{RND}(1,1) & \varphi_{RND}(1,2) & .. & .. & \varphi_{RND}(1,N_{CARRIERS}) \\ \varphi_{RND}(2,1) & \varphi_{RND}(2,2) & .. & .. & \varphi_{RND}(2,N_{CARRIERS}) \\ .. & .. & .. & .. & .. \\ .. & .. & .. & .. & .. \\ \varphi_{RND}(N_{FRAME},1) & .. & & .. & .. & \varphi_{RND}(N_{FRAME},N_{CARRIERS}) \end{pmatrix}$$

mit

$N_{FRAME}$ : Anzahl der OFDM-Symbole innerhalb eines Rahmens
$N_{CARRIERS}$ : Anzahl der OFDM-Subträger

Die einzelnen Elemente $\varphi_{RND}(l,k)$ können dabei idealerweise von einer Pseudo-Noise-Folge entstammen. Dadurch wird die größtmögliche Variation zwischen den Pilotphasen unterschiedlicher OFDM-Symbole erreicht. Denkbar ist auch die Verwendung eines einfacheren Phasengesetzes wie in Gleichung 3 beschrieben.

$$\varphi_{RND}(l,k) = \frac{\pi}{N_0}k^2 \cdot l; \quad \Rightarrow \quad P_{l,p(l,k)} = \sqrt{2} \cdot e^{j\frac{\pi \cdot (1+l)}{N_0} \cdot p(l,k)^2}$$

**Gleichung 3**

Eine weitere Alternative besteht in der Verwendung eines Phasengesetzes nach Gleichung 4:

$$\varphi_{RND}(l,p(l,k)) = \varphi_{RND}(l,k_l + ixy) = \arg\{Z(l)\} + 2\pi \cdot xy \cdot \frac{T_G + l \cdot T_S}{T_U} \cdot i$$

$$+ 2\pi \cdot \frac{i^2(1+l)}{P_0}$$

**Gleichung 4**

In Gleichung 4 bedeuten

$x$ : Frequenz-Sub-Sampling-Faktor
$y$ : Zeit-Sub-Sampling-Faktor
$T_G$ : Schutzintervall
$T_U$ : nutzbare Symboldauer
$T_S$ : OFDM-Symboldauer; $T_S = T_G + T_U$
$k_l$ : Index des ersten Pilotsubträger im $l$-ten OFDM-Symbol
$p(l,k)$ : Index eines Pilotsubträgers im $l$-ten OFDM-Symbol eines Rahmens; $p(l,k)=k_l+ixy$
$P_0$ : Konstante
$i$ : Index
$\arg\{Z(l,k_l)\}$ : Phase des ersten Pilotsubträger im $l$-ten OFDM-Symbol (= Startphase zur deterministischen Berechnung der übrigen Pilotsubträgerphasen)

Die Phasenwerte $\arg\{Z(l,k_l)\}$ werden als Elemente einer Pseudo-Noise-Folge gewählt.
Wichtig ist, dass durch Hinzufügen einer zusätzlichen Phasenrotation ein innerhalb des Übertragungsrahmen eindeutiges Pilotphasenprofil entsteht. Die exakte Berechnungsvorschrift zur Ermittlung des Pilotphasenprofils spielt für den vorgeschlagenen Synchronisationsalgorithmus eine untergeordnete Rolle. Will man mit dem nachfolgend beschriebenen Algorithmus eine Rahmensynchronisation durchführen, so muß $\varphi_{RND}(l,k)$ eine echte Funktion von $l$ und $k$ sein. Wählt man hingegen $\varphi_{RND}(l,k)=f(l)$ oder $\varphi_{RND}(l,k)=f(l)+f(s)$, so ist mit dem nachfolgend beschriebenen Algorithmus nur eine Ermittlung der groben Frequenzablage möglich. Für eine Rahmensynchronisation aus der verteilten Pilotanordnung müssen die Pilotphasen verschiedener OFDM-Symbole hinreichend verschieden sein, oder - mathematisch ausgedrückt - $\varphi_{RND}(l,k)=f(l,k)$ muß also eine echte Funktion von Subträgerindex $k$ und OFDM-Symbolnummer $l$ sein.

Weiterhin wichtig ist, dass $\varphi_{RND}(l,k)=\varphi_{RND}(l+N_{FRAME},k)$ gilt. Generell gilt, je "zufälliger" die Pilotphasen gewählt werden, desto mehr Möglichkeiten eröffnen sich für einen Synchronisationsalgorithmus.

Im folgenden wird gezeigt, wie ein eindeutiges Pilotphasenprofil sowohl zur Rahmensynchronisation als auch zur Ermittlung der groben Frequenzablage bei einem kohärenten OFDM-System verwendet werden kann. Zusätzliche Redundanz zur Rahmensynchronisation wird durch dieses Verfahren vermieden.

Bevor der vorgeschlagene Synchronisationsalgorithmus angewendet werden kann, muß eine grobe Zeitsynchronisation zur Plazierung des DFT-(Demodulations-)Fensters durchgeführt werden. Eine grobe Zeitsynchronisation kann mittels Berechnung der Korrelation von Teilen des Guard-Intervalls mit dem entsprechenden Abschnitt am Ende des nutzbaren OFDM-Symbols erreicht werden. Es ist bekannt, dass mit dem gleichen Verfahren ebenfalls eine Schät-zung der feinen Frequenzablage ($\pm$ 0.5 $1/T_U$) ermittelt werden kann. Unbekannt, aber für eine korrekte Demodulation der Nutzdaten unerläßlich, sind jetzt noch eine Detektion der groben Frequenzablage (ganzzahlige Vielfache des Subträgerabstands $1/T_U$) und des Rahmenanfangs. Diese können mit folgendem Verfahren ermittelt werden.

Ausgangspunkt zur Ermittlung der groben Frequenzablage und des Rahmenanfangs ist die Berechnung einer Kreuzkorrelation zwischen den empfangenen Subträgersymbolen $R(l,k)$ mit der Pilotphasensequenz $W(l,p(l,k))$. Die Berechnungsvorschrift nach Gleichung 5 wird im Folgenden Pilotphasenmetrik genannt. Voraussetzung für die Anwendung der Pilotphasenmetrik ist, dass der Beginn des OFDM-Demodulationsfensters im intersymbolinterferenzfreien (ISI-freien) Bereich des Schutzintervalls liegt.

$$\Lambda(l,p(l,k),s,i) = ABS\left[\sum_k W^*(l,p(l,k)) \cdot W(l,p(l,k+1)) \cdot R(s,p(l,k)+i) \cdot R^*(s,p(l,k+1)+i)\right]$$

**Gleichung 5**

In Gleichung 5 bedeuten

$l$          : OFDM-Symbolnummer innerhalb eines Rahmens

$p(l,k)$     : Index eines Pilotsubträgers im $l$-ten OFDM-Symbol eines Rahmens

$i$          : Probierposition zur Ermittlung der groben Frequenzablage (Index $i$ läuft in Frequenzrichtung)

$s$          : Probierposition zur Ermittlung des Rahmenanfangssymbols(Index $s$ läuft in Zeitrichtung)

$ABS$        : Absolutwert

$R(l,k)$     : $k$-tes Subträgersymbol im $l$-ten OFDM-Symbol

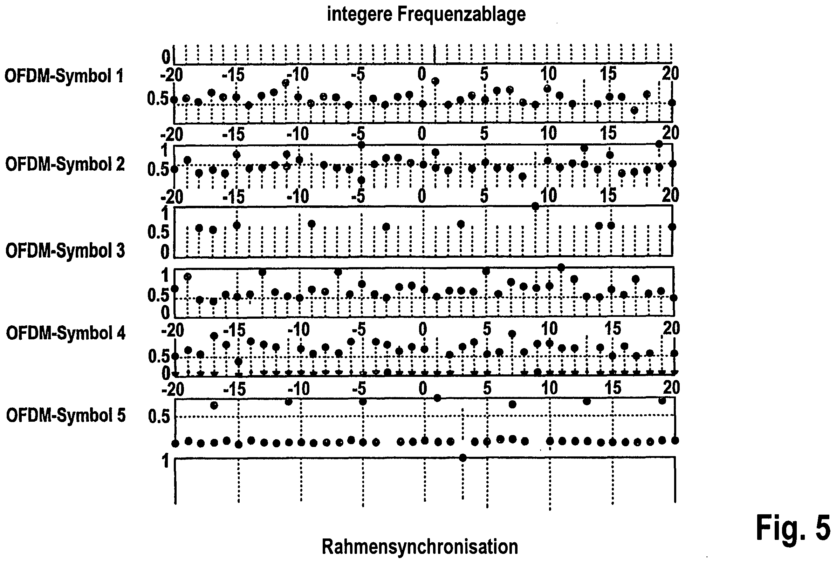

Gleichung 5 liefert dann einen maximalen Wert, wenn die Pilotphasensequenz $W(l,p(l,k))$ mit der empfangenen Subträgersequenz $R(s,p\,(l,k)+i)$ übereinstimmt. In allen anderen Fällen nimmt die Pilotphasenmetrik bei Verwendung eines Pseudo-Noise-Phasenprofils auf Grund des Pseudo-Noise-Charakters der Phasensequenz einen kleinen Wert an. Figur 5 veranschaulicht diesen Sachverhalt. Zur Ermittlung der groben Frequenzablage ist Gleichung 5 für mehrere Probierpositionen $i$ zu berechnen.

Wird hingegen ein deterministisches Pilotphasenprofil nach Gleichung 3 oder Gleichung 4 verwendet, so wird die Pilotphasenmetrik mit dem Pilotabstand periodisch. In diesem Fall ist mit Gleichung 5 nur eine Ermitlung des Rahmenanfangs möglich. Der Fangbereich zur Ermittlung der groben Frequenzablage ist durch den Abstand der Pilotsubträger $xy$ eingeschränkt.

Ist sogar eine exakte Zeitsynchronisation bekannt, so kann alternativ zum Auffinden des groben Frequenzversatzes und des Rahmenanfangs Gleichung 6 verwendet werden. Im Vergleich zu Gleichung 5 wird hier direkt die Kreuzkorrelation zwischen der Pilotphasensequenz $W(l,p(l,k))$ und den empfangenen Subträgersymbolen berechnet.

$$\Lambda(l,p(l,k),s,i) = ABS\left[\sum_k W^*(l,p(l,k)) \cdot R(s,p(l,k)+i)\right]$$

**Gleichung 6**

Mit Gleichung 6 ist eine eindeutige Ermittlung des groben Frequenzversatzes sowohl mit einem Pseudo-Noise-Phasenprofil oder einem deterministischen Phasenprofil nach Gleichung 3 oder Gleichung 4 möglich.

Um eine Rahmensynchronisation zu erreichen, kann man einerseits die empfangenen Subträgersymbole mit allen möglichen Pilotphasensequenzen eines Rahmens korrelierten oder andersherum eine Pilotphasensequenz mit allen empfangenen Subträgersymbolen korrelieren.

Zur Verbesserung der Schätzergebnisse kann nicht nur nach einem bestimmten Pilotphasenprofil $W(l,p(l,k))$ gesucht werden, sondern auch gleich nach mehreren; denn nach Gleichung 3 ist das Pilotphasenprofil für jedes OFDM-Symbol eines Rahmens eindeutig. Mathematisch bedeutet dies eine Mittelung der Metrikergebnisse $\Lambda(l,p(l,k),s,i)$ aus Gleichung 5:

$$\overline{\Lambda}(s,i) = \sum_{l=1}^{nb} \Lambda(l, p(l,k), s, i)$$

$$\text{Gleichung 7}$$

mit

$nb$: Anzahl der OFDM-Symbole, über die gemittelt wird ($1 .. N_{FRAME}$)

Zur Beurteilung der Matrixelemente $\Lambda(s,\hat{i}_s)$ lassen sich verschiedene Korrelationsgütemaße definieren, wie zum Beispiel das *HNV*, welches das Verhältnis des Hauptmaximums $\overline{\Lambda}(s,\hat{i}_s)$ an der Stelle $\hat{i}_s$ der Pilotphasenmetrik zum betragsgrößten Nebenmaximum angibt. Das *HNV* ist für alle möglichen Positionen des Rahmenanfangs zu berechnen (also insgesamt $N_{FRAME}$ mal).

$$HNV(s,\hat{i}_s) = \frac{\overline{\Lambda}(s,\hat{i}_s)}{\max_i\{\overline{\Lambda}(s,i)\}\big|_{i \neq \hat{i}_s}}$$

$$\text{Gleichung 8}$$

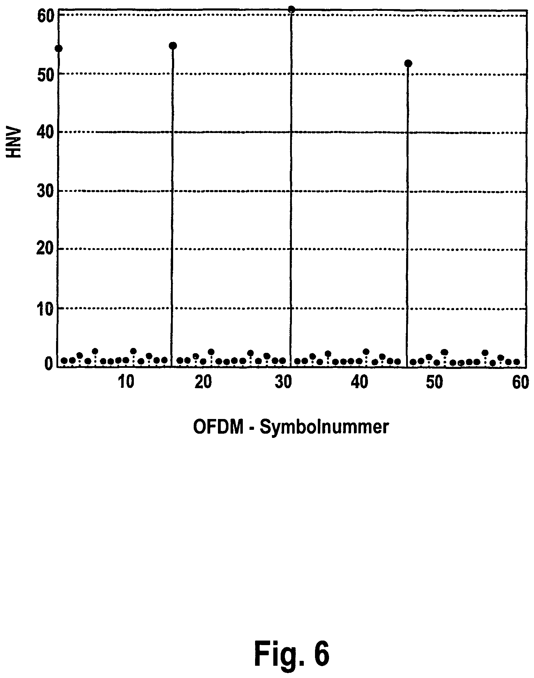

Figur 6 zeigt die *HNV*-Werte für 4 DRM-Rahmen. Das Rahmenanfangssymbol ist jeweils deutlich zu erkennen. Eine Maximumdetektion von *HNV* liefert:

$$HNV_{\max}(s_{\max}, i_{\max}) = \max_s\{HNV(s,\hat{i}_s)\}$$

$$\text{Gleichung 9}$$

Die Indizes $s_{max}$ und $i_{max}$ in Gleichung 9 des maximalen *HNV* geben die Position des Rahmenanfangssymbols bzw. die grobe Frequenzablage an. Analog zum *HNV* kann man als Korrelationsgütemaß auch den Meritfaktor (*MF*) benutzen. Der Meritfaktor beschreibt das Verhältnis der Energie des Hauptwertes der Pilotphasenmetrik $\overline{\Lambda}^2(s,\hat{i}_s)$ zur gesamten in den Nebenwerten enthaltenen Energie. Der Auswertealgorithmus zur Rahmen- und Frequenzsynchronisation lautet dann:

$$MF(s,\hat{i}) = \frac{\overline{\Lambda}^2(s,\hat{i}_s)}{\sum_{\substack{i \\ i \neq \hat{i}_s}} |\overline{\Lambda}(s,i)|^2}$$

$$\text{Gleichung 10}$$

Eine Maximumdetektion von *MF* liefert:

$$MF_{\max}(s_{\max}, i_{\max}) = \max_{s}\{MF(s, \hat{i}_s)\}$$

**Gleichung 11**

Auch hier geben die Indizes $s_{max}$ und $i_{max}$ des maximalen *MF* das Rahmenanfangssymbol bzw. die grobe Frequenzablage an.
Der maximale Fangbereich der Pilotphasenmetrik wird durch die Anzahl der im Auswertebereich vorhandenen Pilotsubträgersymbole bestimmt. Bei Verwendung von Pilotanordnungen nach Figur 4 kann der Fangbereich mehr als eine halbe DFT-Länge betragen.

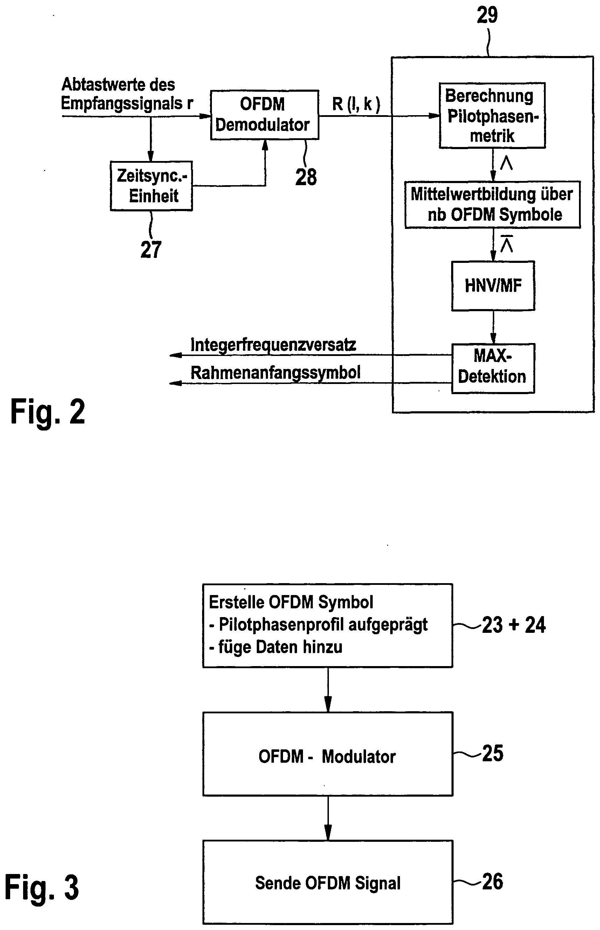

Figur 2 zeigt nun als Blockschaltbild das erfindungsgemäße Verfahren das im Empfänger abläuft. Die Abtastwerte des Empfangssignals r, die durch den Analog- Digitalwandler 16 gewonnen wurden, werden einer Zeitsynchronisationseinheit 27 und einem OFDM-Demodulator (= DFT-Einheit) 28 zugeführt. Die Zeitsynchronisationseinheit 27 führt eine grobe Zeitsynchronisation anhand des im Empfangssignal enthaltenen Schutzintervalls durch. Genauergesagt wird mittels Berechnung einer Autokorrelation der Beginn des Schutzintervalls und damit der Beginn eines OFDM-Symbols gesucht.

Die mit dem OFDM-Demodulator 28 demodulierten Daten R(l,k) werden dann einer Berechnung der Pilotphasenmetrik in einem Prozessor 29 zugeführt. Der sich daraus ergebene Wert Λ wird einer Mittelwertbildung über eine vorgegebene Anzahl von OFDM-Symbolen zugeführt, um einen Mittelwert für Λ zu berechnen. Auch dies wird im Prozessor 29 durchgeführt. Dann folgt entweder eine Bewertung dieses Korrelationswertes $\overline{\Lambda}$ mit einem Haupt- Nebenmaximum- Verhältnis oder wie oben dargestellt mit einem Meritfaktor, wobei auch diese Bewertung im Prozessor 29 ausgeführt wird.

Die Indizes des so berechneten Maximalwertes des Korrelationsgütemaßes geben die Position des Rahmenanfangssymbols bzw. die grobe Frequenzablage an. Mit anderen Worten liegt am Ausgang des Prozessors 29 als Ergebnis der Frequenzversatz in ganzzahligen Vielfachen des Subträgerfrequenzabstands vor, und das Rahmenanfangssymbol ist bei der Detektion des Maximalwerts gefunden. Der Empfänger sucht also mit einem abgespeicherten Pilotphasenprofil die empfangenen Subträgersymbole Wert für Wert ab. Ist eine größtmögliche Übereinstimmung zwischen abgespeicherten Pilotphasenprofil und empfangenen Pilotphasenprofil erreicht, dann ist der Rahmenanfang gefunden und der grobe Frequenzversatz detektiert.

Figur 3 zeigt als Flussdiagramm das erfindungsgemäße Verfahren, das im Sender abläuft. In einem ersten Verfahrensschritt 23 werden die Piloten und die zu übertragenden Nutzsymbole auf ein OFDM-Symbol abgebildet. Gleichzeitig wird den Piloten das eindeutige Pilotphasenprofil aufgeprägt (Verfahrensschritt 24). Das so entstandene OFDM-Symbol wird dann dem OFDM-Modulator 10 und 11 zugeführt (Verfahrensschritt 25), um ein OFDM-Signal zu erzeugen. Des weiteren wird im dem OFDM-Signal noch ein Schutzintervall zugefügt. Im Block 13 wird das OFDM-Signal versendet (Verfahrensschritt 26).

**Patentansprüche**

1. Verfahren zur Rahmen- und Frequenzsynchronisation von einem orthogonalen Frequenzmultiplex, OFDM, -Signal, wobei mit dem OFDM-Signal OFDM-Symbole, die jeweils Piloten als Subträgersymbole aufweisen, empfangen werden, wobei die Piloten für eine Kanalschätzung benutzt werden und wobei den Piloten jeweils eine zusätzliche Phasenrotation aufgeprägt wurde und wobei die empfangenen Subträgersymbole mit wenigstens einem abgespeicherten Pilotphasenprofil verglichen werden und wobei in Abhängigkeit von dem Vergleich die Rahmen- und Frequenzsynchronisation des OFDM-Signals durchgeführt wird, wobei durch das Hinzufügen einer zusätzlichen Phasenrotation zu den Piloten innerhalb eines Übertragungsrahmens ein eindeutiges Pilotphasenprofil entsteht, wobei vor dem Vergleich der empfangenen Subträgersymbole mit dem abgespeicherten Pilotphasenprofil eine grobe Zeitsynchronisation durch eine Suche nach dem Schutzintervall in den empfangenen OFDM-Signal durchgeführt wird, und wobei die Piloten gleichmäßig in einem OFDM-Symbol verteilt werden.

2. Verfahren zum Senden eines OFDM-Signals, wobei mit dem OFDM-Signal OFDM-Symbole gesendet werden, denen jeweils ein Schutzintervall zugefügt wurde und die jeweils Subträgersymbole aufweisen, wobei vorgegebene Subträgersymbole als Piloten gesendet werden, wobei die Piloten für eine Kanalschätzung benutzt werden und wobei den Piloten jeweils eine jeweilige Phase vor dem Senden aufgeprägt wird, so dass sich wenigstens ein Pilotphasenprofil ergibt, und wobei den Piloten jeweils eine zusätzliche Phasenrotation aufgeprägt wird, wobei durch das Hinzufügen einer zusätzlichen Phasenrotation zu den Piloten innerhalb eines Übertragungsrahmens ein eindeutiges Pilotphasenprofil entsteht, und wobei die Piloten gleichmäßig in einem OFDM-Symbol verteilt werden.

3. Verfahren nach Anspruch 1, **dadurch gekennzeichnet, dass** der Vergleich durch eine Kreuzkorrelation durchgeführt wird und die Kreuzkorrelation dann für die Bestimmung der Rahmen- und Frequenzsynchronisation bewertet wird.

4. Verfahren nach Anspruch 1 oder 3, **dadurch gekennzeichnet, dass** der Vergleich nach folgender Gleichung durchgeführt wird:

$$\Lambda(l, p(l,k), s, i) = ABS\left[\sum_k W^*(l, p(l,k)) \cdot W(l, p(l,k+1)) \cdot R(s, p(l,k)+i) \cdot R^*(s, p(l,k+1)+i)\right]$$

mit:

$l$ : OFDM-Symbolnummer innerhalb eines Rahmens
$p(l,k)$ : Index eines Pilotsubträgers im $l$-ten OFDM-Symbol eines Rahmens
i : Probierposition zur Ermittlung der groben Frequenzablage; Index i läuft in Frequenzrichtung
s : Probierposition zur Ermittlung des Rahmensymbols; Index s läuft in Zeitrichtung
ABS : Absolutwert
R(l,k) : k-tes Subträgersymbol im $l$-ten OFDM-Symbol.

5. Verfahren nach Anspruch 1 oder 2, **dadurch gekennzeichnet, dass** das Pilotphasenprofil durch eine Gleichung oder eine Pseudo- Zufallsfolge bestimmt wird.

6. Verfahren nach Anspruch 5, **dadurch gekennzeichnet, dass** die Gleichung

$$P_{l,p(l,k)} = \sqrt{2} \cdot W_{p(l,k)} = \sqrt{2} \cdot e^{j\frac{\pi \cdot p(l,k)^2}{N_0}} \cdot e^{j\varphi_{RND}(l,k)}$$

lautet mit

p($l$,k) : Index eines Pilotsubträgers im $l$-ten OFDM-Symbol eines Rahmens
$N_0$ : Integerzahl
k : Subträgerindex
$l$ : OFDM-Symbolnummer.

7. Verfahren nach Anspruch 5, **dadurch gekennzeichnet, dass** die Gleichung

$$\varphi_{RND}(l, p(l,k)) = \varphi_{RND}(l, k_l + ixy) = \arg\{Z(l)\} + 2\pi \cdot xy \cdot \frac{T_G + l \cdot T_S}{T_U} \cdot i$$

$$+ 2\pi \cdot \frac{i^2(1+l)}{P_0}$$

lautet, mit

x : Frequenz-Sub-Sampling-Faktor
y : Zeit-Sub-Sampling-Faktor
$T_G$ : Schutzintervall
$T_g$ : nutzbare Symboldauer
$T_S$ : OFDM-Symboldauer; $T_S = T_G + T_g$
k/$k_1$ : Index des ersten Pilotsubträgers im $l$-ten OFDM-Symbol
p($l$,k) : Index eines Pilotsubträgers im $l$-ten OFDM-Symbol eines Rahmens; p($l$,k)=$k_1$+ixy

$P_0$ : Konstante

i : Index

arg $\{Z(l,k_l,k_1)\}$ : Phase des ersten Pilotsubträgers im *l*-ten OFDM-Symbol, bzw. Startphase zur deterministischen Berechnung der übrigen Pilotsubträgerphasen

**8.** Verfahren nach Anspruch 3 oder 4, **dadurch gekennzeichnet, dass** zur Bewertung der Kreuzkorrelation ein Haupt-Nebenmaximum-Verhältnis verwendet wird.

**9.** Verfahren nach Anspruch 3 oder 4, **dadurch gekennzeichnet, dass** ein Meritfaktor zur Bewertung der Kreuzkorrelation verwendet wird.

**10.** Sender zum Senden eines OFDM-Signals, wobei mit dem OFDM-Signal OFDM-Symbole gesendet werden, denen jeweils ein Schutzintervall zugefügt wurde und die jeweils Subträgersymbole aufweisen, wobei vorgegebene Subträgersymbole als Piloten gesendet werden, wobei der Sender einen Speicher (30) mit dem Pilotphasenprofil, einen OFDM-Modulator (10, 11), eine Antenne (12) zum Versenden des OFDM-Signals und eine Vorrichtung zur Einspeisung (11) der Piloten mit dem Pilotphasenprofil aufweist, wobei die Piloten für eine Kanalschätzung dienen, wobei das Pilotphasenprofil den Piloten eine zusätzliche Phasenrotation hinzufügt, wobei durch das Hinzufügen einer zusätzlichen Phasenrotation zu den Piloten innerhalb eines Übertragungsrahmens ein eindeutiges Pilotphasenprofil entsteht, und wobei die Piloten gleichmäßig in einem OFDM-Symbol verteilt werden.

**11.** Empfänger zur Rahmen- und Frequenzsynchronisation eines orthogonalen Frequenzmultiplex, OFDM, -Signals, wobei mit dem OFDM-Signal OFDM-Symbole, die jeweils Piloten als Subträgersymbole aufweisen, empfangen werden, wobei die Piloten für eine Kanalschätzung dienen, wobei der Empfänger eine erste Zeitsynchronisationseinheit (18, 27) für die grobe Zeitsynchronisation, einen OFDM-Demodulator (17, 28) und einen Prozessor (29) mit Speicher zur Durchführung des Vergleichs zwischen den empfangenen Subträgersymbolen und dem abgespeicherten Pilotphasenprofil aufweist und das Vergleichsergebnis zur Bestimmung der Frequenzablage und der relativen Position innerhalb des Übertragungsrahmens heranzieht, und wobei den Piloten jeweils eine zusätzliche Phasenrotation aufgeprägt wird, wobei durch das Hinzufügen einer zusätzlichen Phasenrotation zu den Piloten innerhalb eines Übertragungsrahmens ein eindeutiges Pilotphasenprofil entsteht, und wobei die Piloten gleichmäßig in einem OFDM-Symbol verteilt werden.

**Claims**

**1.** Method for the frame and frequency synchronization of an orthogonal frequency-division multiplex, OFDM, signal, wherein OFDM symbols each having pilots as subcarrier symbols are received with OFDM signal, wherein the pilots are used for a channel estimation, and wherein an additional phase rotation has been impressed on each of the pilots, and wherein the received subcarrier symbols are compared with at least one stored pilot phase profile, and wherein the frame and frequency synchronization of the OFDM signal is carried out on the basis of the comparison, wherein a unique pilot phase profile is produced by adding an additional phase rotation to the pilots within a transmission frame, wherein a rough time synchronization is carried out before comparing the received subcarrier symbols with the stored pilot phase profile by searching for the guard interval in the received OFDM signal, and wherein the pilots are uniformly distributed in an OFDM symbol.

**2.** Method for transmitting an OFDM signal, wherein OFDM symbols, to each of which a guard interval has been added and which each have subcarrier symbols, are transmitted with the OFDM signal, wherein predefined subcarrier symbols are transmitted as pilots, wherein the pilots are used for a channel estimation, and wherein a respective phase is impressed on each of the pilots before transmission, thus resulting in at least one pilot phase profile, and wherein an additional phase rotation is impressed on each of the pilots, wherein a unique pilot phase profile is produced by adding an additional phase rotation to the pilots within a transmission frame, and wherein the pilots are uniformly distributed in an OFDM symbol.

**3.** Method according to Claim 1, **characterized in that** the comparison is carried out by means of a cross-correlation and the cross-correlation is then assessed in order to determine the frame and frequency synchronization.

**4.** Method according to Claim 1 or 3, **characterized in that** the comparison is carried out according to the following equation:

$$\Lambda(l, p(l,k), s, i) = ABS\left[\sum_k W^*(l, p(l,k)) \cdot W(l, p(l,k+1)) \cdot R(s, p(l,k)+i) \cdot R^*(s, p(l,k+1)+i)\right]$$

where:

1 : is the OFDM symbol number inside a frame
$p(l,k)$ : is the index of a pilot subcarrier in the l-th OFDM symbol of a frame
i : is the trial position for determining the rough frequency offset; index i runs in the frequency direction
s : is the trial position for determining the frame symbol; index s runs in the time direction
ABS : is an absolute value
$R(l,k)$ : is the k-th subcarrier symbol in the l-th OFDM symbol.

5. Method according to Claim 1 or 2, **characterized in that** the pilot phase profile is determined by means of an equation or a pseudo-random sequence.

6. Method according to Claim 5, **characterized in that** the equation is

$$P_{i,p(l,k)} = \sqrt{2} \cdot W_{p(l,k)} = \sqrt{2} \cdot e^{j\frac{\pi \cdot p(l,k)^2}{N_0}} \cdot e^{j\varphi RND(l,k)}$$

where

$p(l,k)$ : is the index of a pilot subcarrier in the l-th OFDM symbol of a frame
No : is an integer number
k : is the subcarrier index
l : is the OFDM symbol number.

7. Method according to Claim 5, **characterized in that** the equation is

$$\varphi_{RND}(l, p(l,k)) = \varphi_{RND}(l, k_l + ixy) = \arg\{Z(l)\} + 2\pi \cdot xy \cdot \frac{T_G + l \cdot T_S}{T_U} \cdot i + 2\pi \cdot \frac{i^2(1+l)}{P_0}$$

where

x : is the frequency subsampling factor
y : is the time subsampling factor
$T_G$ : is the guard interval
$T_g$ : is the usable symbol duration
$T_S$ : is the OFDM symbol duration; $T_S = T_G + T_g$
$k_l k_1$ : is the index of the first pilot subcarrier in the l-th OFDM symbol
$p(l,k)$ : is the index of a pilot subcarrier in the l-th OFDM symbol of a frame; $p(l, k) = k_1 + ixy$
$P_0$ : is a constant
i : is an index
$\arg\{Z(l,k_l,k_1)\}$ : is the phase of the first pilot subcarrier in the l-th OFDM symbol or start phase for deterministically calculating the other pilot subcarrier phases.

8. Method according to Claim 3 or 4, **characterized in that** a main/secondary maximum ratio is used to assess the cross-correlation.

9. Method according to Claim 3 or 4, **characterized in that** a merit factor is used to assess the cross-correlation.

10. Transmitter for transmitting an OFDM signal, wherein OFDM symbols, to each of which a guard interval has been added and which each have subcarrier symbols, are transmitted with the OFDM signal, wherein predefined subcarrier symbols are transmitted as pilots, wherein the transmitter has a memory (30) containing the pilot phase profile, an

**EP 1 374 513 B1**

OFDM modulator (10, 11), an antenna (12) for transmitting the OFDM signal and an apparatus for supplying (11) the pilots with the pilot phase profile, wherein the pilots are used for a channel estimation, wherein the pilot phase profile adds an additional phase rotation to the pilots, wherein a unique pilot phase profile is produced by adding an additional phase rotation to the pilots within a transmission frame, and wherein the pilots are uniformly distributed in an OFDM symbol.

11. Receiver for the frame and frequency synchronization of an orthogonal frequency-division multiplex, OFDM, signal, wherein OFDM signals each having pilots as subcarrier symbols are received with the OFDM signal, wherein the pilots are used for a channel estimation, wherein the receiver has a first time synchronization unit (18, 27) for the rough time synchronization, an OFDM demodulator (17, 28) and a processor (29) with a memory for carrying out the comparison between the received subcarrier symbols and the stored pilot phase profile and uses the comparison result to determine the frequency offset and the relative position within the transmission frame, and wherein an additional phase rotation is impressed on each of the pilots, wherein a unique pilot phase profile is produced by adding an additional phase rotation to the pilots within a transmission frame, and wherein the pilots are uniformly distributed in an OFDM symbol.

**Revendications**

1. Procédé de synchronisation de trame et de fréquence d'un signal de multiplexage par répartition orthogonale de la fréquence, OFDM, des symboles OFDM qui possèdent respectivement des pilotes en tant que symboles de sous-porteuse étant reçus avec le signal OFDM, les pilotes étant utilisés pour une estimation de canal et une rotation de phase supplémentaire ayant respectivement été appliquée aux pilotes et les symboles de sous-porteuse reçus étant comparés à au moins un profil de phase de pilote mis en mémoire et la synchronisation de trame et de fréquence du signal OFDM étant effectuée en fonction de la comparaison, un profil de phase de pilote univoque étant obtenu par l'ajout d'une rotation de phase supplémentaire aux pilotes à l'intérieur d'une trame de transmission, une synchronisation dans le temps approximative étant effectuée avant la comparaison des symboles de sous-porteuse reçus au profil de phase de pilote mis en mémoire par une recherche de l'intervalle de protection dans le signal OFDM reçu, et les pilotes étant distribués de manière homogène dans un symbole OFDM.

2. Procédé d'émission d'un signal OFDM, des symboles OFDM auxquels est respectivement ajouté un intervalle de protection et qui possèdent respectivement des symboles de sous-porteuse étant émis avec le signal OFDM, des symboles de sous-porteuse prédéfinis étant émis en tant que pilotes, les pilotes étant utilisés pour une estimation de canal et une phase correspondante étant respectivement appliquée aux pilotes avant l'émission, de manière à obtenir au moins un profil de phase de pilote, et une rotation de phase supplémentaire étant respectivement appliquée aux pilotes, un profil de phase de pilote univoque étant obtenu par l'ajout d'une rotation de phase supplémentaire aux pilotes à l'intérieur d'une trame de transmission, et les pilotes étant distribués de manière homogène dans un symbole OFDM.

3. Procédé selon la revendication 1, **caractérisé en ce que** la comparaison est effectuée par une corrélation croisée et la corrélation croisée est ensuite évaluée pour la détermination de la synchronisation de trame et de fréquence.

4. Procédé selon la revendication 1 ou 3, **caractérisé en ce que** la comparaison est effectuée conformément à l'équation suivante :

$$\Lambda(l,p(l,k),s,i) = \text{ABS}\left[\sum_k W^\star(l,p(l,k)) \cdot W(l,p(l,k+1)) \cdot R(s,p(l,k)+i) \cdot R^\star(s,p(l,k+1)+i)\right]$$

où :

l désigne le numéro du symbole OFDM à l'intérieur d'une trame
p(l,k) désigne l'indice d'une sous-porteuse pilote dans le l-ème symbole OFDM d'une trame
i désigne la position d'essai servant à déterminer la dérive de fréquence nominale approximative ;
l'indice i se déroulant dans le sens de la fréquence
s désigne la position d'essai servant à déterminer le symbole de trame ; l'indice s se déroulant dans le sens du temps
ABS désignant une valeur absolue

R(l,k) désignant le k-ème symbole de sous-porteuse dans le l-ème symbole OFDM.

**5.** Procédé selon la revendication 1 ou 2, **caractérisé en ce que** le profil de phase de pilote est déterminé par une équation ou une séquence pseudo-aléatoire.

**6.** Procédé selon la revendication 5, **caractérisé en ce que** l'équation est

$$P_{i,p(l,k)} = \sqrt{2} \cdot W_{p(l,k)} = \sqrt{2} \cdot e^{j\frac{k.p(l,k)^2}{N_0}} \cdot e^{j\varphi_{RND}(l,k)}$$

où :

p(l,k) désigne l'indice d'une sous-porteuse pilote dans le l-ème symbole OFDM d'une trame
No désigne un nombre entier
k désigne un indice de sous-porteuse
l désigne le numéro du symbole OFDM.

**7.** Procédé selon la revendication 5, **caractérisé en ce que** l'équation est

$$\varphi_{RND}(l,p(l,k)) = \varphi_{RND}(l,k_1 + ixy) = \arg\{Z(l)\} + 2\pi \cdot xy \cdot \frac{T_G + l.T_S}{T_U} \cdot i + 2\pi \cdot \frac{i^2(1+l)}{P_0}$$

où :

x désigne le facteur de sous-échantillonnage de la fréquence
y désigne le facteur de sous-échantillonnage du temps
$T_G$ désigne l'intervalle de protection
$T_g$ désigne la durée utilisable du symbole
$T_S$ désigne la durée du symbole OFDM ; $T_s = T_G + T_g$ $k_l$k1 désigne l'indice de la première sous-porteuse pilote dans le l-ème symbole OFDM
p(l,k) désigne l'indice d'une sous-porteuse pilote dans le l-ème symbole OFDM d'une trame ; p(l,k) = $k_l$ + ixy
$P_0$ désigne une constante
i désigne un indice
arg{Z(l, $k_l$, $k_1$) } désigne la phase de la première sous-porteuse pilote dans le l-ème symbole OFDM ou la phase de départ pour le calcul déterministe des autres phases de sous-porteuse pilote.

**8.** Procédé selon la revendication 3 ou 4, **caractérisé en ce qu'**un rapport maximum principal/secondaire est utilisé pour l'évaluation de la corrélation croisée.

**9.** Procédé selon la revendication 3 ou 4, **caractérisé en ce qu'**un facteur de mérite est utilisé pour l'évaluation de la corrélation croisée.

**10.** Émetteur destiné à émettre un signal OFDM, des symboles OFDM auxquels est respectivement ajouté un intervalle de protection et qui possèdent respectivement des symboles de sous-porteuse étant émis avec le signal OFDM, des symboles de sous-porteuse prédéfinis étant émis en tant que pilotes, l'émetteur possédant une mémoire (30) contenant le profil de phase pilote, un modulateur OFDM (10, 11), une antenne (12) destinée à l'émission du signal OFDM et un dispositif d'injection (11) des pilotes avec le profil de phase pilote, les pilotes servant à une estimation de canal, le profil de phase pilote ajoutant une rotation de phase supplémentaire aux pilotes, l'ajout d'une rotation de phase supplémentaire aux pilotes à l'intérieur d'une trame de transmission produisant un profil de phase univoque, et les pilotes étant distribués de manière homogène dans un symbole OFDM.

**11.** Récepteur destiné à la synchronisation de trame et de fréquence d'un signal de multiplexage par répartition orthogonale de la fréquence, OFDM, des symboles OFDM qui possèdent respectivement des pilotes en tant que symboles de sous-porteuse étant reçus avec le signal OFDM, les pilotes servant à une estimation de canal, le récepteur possédant une première unité de synchronisation dans le temps (18, 27) pour la synchronisation dans le temps approximative, un démodulateur OFDM (17, 28) et un processeur (29) doté d'une mémoire pour effectuer la comparaison entre les symboles de sous-porteuse et le profil de phase de pilote mis en mémoire et utilisant le résultat de la comparaison pour déterminer la dérive de fréquence nominale et la position relative à l'intérieur de la trame de transmission, et une rotation de phase supplémentaire étant respectivement appliquée aux pilotes, l'ajout d'une rotation de phase supplémentaire aux pilotes à l'intérieur d'une trame de transmission produisant un profil de phase univoque, et les pilotes étant distribués de manière homogène dans un symbole OFDM.

Fig. 1

**29**

Abtastwerte des
Empfangssignals r
OFDM Demodulator
R (l, k )
Berechnung Pilotphasen-metrik

$\wedge$

Zeitsync.-Einheit

28

Mittelwertbildung über nb OFDM Symbole

$\overline{\wedge}$

27

HNV/MF

Integerfrequenzversatz
Rahmenanfangssymbol
MAX-Detektion

## Fig. 2

Erstelle OFDM Symbol
- Pilotphasenprofil aufgeprägt
- füge Daten hinzu
23 + 24

OFDM - Modulator
25

## Fig. 3

Sende OFDM Signal
26

EP 1 374 513 B1

+--> Pilotsubträger (k)
I
v                                                           DC (nicht in gebrauch)

OFDM-Symbole (1)
                        negative Frequenzen              :             positive Frequenzen

```
        1                                        :                                          1
        0..9..333333333222222222111111111000000000:000000000111111111222222222333333333..9..0
        3..1..876543210987654321098765432109876543 21:123456789012345678901234567890123456 78..1..3
  0   .   .   ...O.....O.....O.....O.....O.....O....:O.....O.....O.....O.....O.....O.....O.   O   O
  1   .   .   ....O.....O.....O.....O.....O.....O..:..O.....O.....O.....O.....O.....O.....   .   .
  2   O   O   .O.....O.....O.....O.....O.....O.....O:.....O.....O.....O.....O.....O.....O...   .   .
  3   .   .   ...O.....O.....O.....O.....O.....O....:O.....O.....O.....O.....O.....O.....O.   O   O
  4   .   .   ....O.....O.....O.....O.....O.....O..:..O.....O.....O.....O.....O.....O.....   .   .
  5   O   O   .O.....O.....O.....O.....O.....O.....O:.....O.....O.....O.....O.....O.....O...   .   .
  6   .   .   ...O.....O.....O.....O.....O.....O....:O.....O.....O.....O.....O.....O.....O.   O   O
  7   .   .   ....O.....O.....O.....O.....O.....O..:..O.....O.....O.....O.....O.....O.....   .   .
  8   O   O   .O.....O.....O.....O.....O.....O.....O:.....O.....O.....O.....O.....O.....O...   .   .
  9   .   .   ...O.....O.....O.....O.....O.....O....:O.....O.....O.....O.....O.....O.....O.   O   O
 10   .   .   ....O.....O.....O.....O.....O.....O..:..O.....O.....O.....O.....O.....O.....   .   .
 11   O   O   .O.....O.....O.....O.....O.....O.....O:.....O.....O.....O.....O.....O.....O...   .   .
 12   .   .   ...O.....O.....O.....O.....O.....O....:O.....O.....O.....O.....O.....O.....O.   O   O
 13   .   .   ....O.....O.....O.....O.....O.....O..:..O.....O.....O.....O.....O.....O.....   .   .
 14   O   O   .O.....O.....O.....O.....O.....O.....O:.....O.....O.....O.....O.....O.....O...   .   .
```

# Fig. 4

integere Frequenzablage

Rahmensynchronisation

Fig. 5

EP 1 374 513 B1

**OFDM - Symbolnummer**

# Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5627863 A

**In der Beschreibung aufgeführte Nicht-Patentliteratur**

- a low-overhead synchronization scheme for acquisition in OFDM and related transmission methods. **MÜLLER R. et al.** ITG Fachberichte. VDE Verlag

- **CZYLWIK, A.** Degradation of multicarrier and singlecarrier transmission with frequency domain equalization due to pilot-aided channel estimation and frequency synchronization. *Global Telecommunications Conference,* 1997